# EUROPÄISCHE PATENTSCHRIFT

(11) **EP 1 479 278 B1**
(45) Veröffentlichungstag und Bekanntmachung des Hinweises auf die Patenterteilung: **28.02.2007**
(21) Anmeldenummer: 03008460.2
(22) Anmeldetag: 11.04.2003
(51) Int. Cl.: A01D 34/535

(54) **Vorrichtung zum Mulchen**
Device for mulching
Dispositif de paillage

(43) Veröffentlichungstag der Anmeldung: 24.11.2004
(73) Patentinhaber: Julius Tielbürger GmbH & Co. KG, D-32351 Stemwede-Oppenwehe (DE)
(72) Erfinder: Tielbürger, Jörg, 32351 Stemwede (DE)
(74) Vertreter: Dantz, Jan Henning

(56) Entgegenhaltungen:
- EP-A- 0 956 758
- FR-A- 2 772 552
- GB-A- 995 460
- GB-A- 2 307 630
- US-A- 2 691 262

## Beschreibung

Die Erfindung betrifft einen Schlegelmulcher mit einer rotierend antreibbaren Schlegelwelle, auf der Halter festgelegt sind, in denen Schlegelmesser gehalten sind, die in Richtung der Drehachse der Schlegelwelle in einem Versatz sowie im Winkelabstand zueinander derart stehen, daß in Richtung der Drehachse der Schlegelwelle gesehen, eine sternförmige Anordnung der Schlegelmesser gegeben ist, und daß in radialer Richtung auf der Schlegelwelle jeweils zwei Halter im Winkelversatz von 180° sich einander gegenüberstehen.

Der in Rede stehende Schlegelmulcher ist auch als Landschaftspflegegerät anzusehen. Er wird benutzt, um beispielsweise Gras, Gestrüpp und ähnliche Pflanzen vom Boden abzuschlagen und gleichzeitig zu verkleinern. Die Mulchdecke verbleibt dann auf der Fläche und bildet sinngemäß eine Abdeckung. Der Schlegelmulcher ist nicht für den Einsatz für landwirtschaftliches Erntegut geeignet.

Aus der US 2 691 262 ist ein Schlegelmulcher bekannt, der als Raupenfahrzeug ausgebildet ist, und der mit einer von einem Motor antreibbaren Schlegelwelle ausgestattet ist. An der Schlegelwelle sind in Längsrichtung der Schlegelwelle im Versatz zueinander stehende Halter angebracht, die auch in einem solchen Winkelversatz zueinander stehen, daß ein daran befestigtes Schlegelmesser spiralförmig verläuft. Bei einem aus der GB 995 460 bekannten Schlegelmulcher sind auf die Schlegelwelle Halter für die Schlegelmesser fest aufgesetzt, die in Längsrichtung der Schlegelwelle im Versatz zueinander stehen und darüber hinaus auch noch im Winkelabstand.

Durch die vorgenannten Ausführungen wird erreicht, daß immer nur eine relativ geringe Anzahl von Schlegelmessern sich in der Arbeitsstellung befindet. Dadurch wird eine geringstmögliche Leistung des Antriebsmotors erreicht.

Aus den zuvor zitierten Entgegenhaltungen sind Schlegelmulcher bekannt, die nach den damaligen Fertigungsmethoden überwiegend manuell hergestellt wurden, d.h. die Halter für die Schlegelmesser wurden durch einen von Hand durchgeführten Schweißvorgang mit der Schlegelwelle verbunden. Derartige Fertigungsmethoden sind jedoch heute wirtschaftlich nicht mehr zu vertreten, so daß man bestrebt ist, in der Fertigung solcher Gegenstände Schweißautomaten oder Schweißroboter einzusetzen. Dafür sind die vorgenannten Konstruktionen nicht geeignet.

Ausgehend von einem derartigen Stand der Technik liegt der Erfindung die Aufgabe zugrunde, einen Schlegelmulcher gemäß dem zitierten Stand der Technik so zu gestalten, daß er für heutige Fertigungsmethoden geeignet ist, d.h. daß er für den Einsatz von Schweißautomaten oder Schweißrobotern ausgelegt ist.

Die gestellte Aufgabe wird gelöst, indem die Halter für die Schlegelmesser derart zueinander angeordnet sind, daß in Längsrichtung der Schlegelwelle zwei sich gegenüberliegende durchgehende, von Haltern und Schlegelmessern frei gehaltene Lücken gebildet sind.

Für die vorzugsweise maschinell durchzuführenden Schweißvorgänge sind nunmehr Freiräume geschaffen, so daß eine wirtschaftliche Fertigung möglich ist. Die Lücken entsprechen dem doppelten Winkelabstand, in dem die Schlegelmesser bzw. die Halter zueinander stehen.

Bei dem Schlegelmulcher ergibt sich die Anzahl der Messer aus der jeweiligen Arbeitsbreite des Messers bzw. von zwei in einem Halter eingesetzten Messern. Aus der Anzahl der benötigten Messer ergibt sich der Winkelabstand von zwei in Achsrichtung hintereinander angeordneten Haltern bzw. der darin eingesetzten Schlegelmesser. Bei einer extrem großen Arbeitsbreite ist es auch denkbar, daß der Winkelabstand von zwei in Achsrichtung hintereinander angeordneten Haltern sich aus dieser Teillänge ergibt. Sinngemäß würde damit die Schlegelwelle in mehrere Teile unterteilt.

Da sich immer zwei Halter bzw. die darin eingesetzten Messer gegenüberstehen, rotiert die Schlegelwelle ohne Unwucht, da den schlagenden Messern stets eine gleiche Anzahl von Messern gegenüberliegt, die sinngemäß das Gegengewicht bilden. Sofern in jedem Halter zwei Messer eingesetzt sind, schlagen normalerweise vier Messer. In bevorzugter Ausführung ist jedoch vorgesehen, daß die Winkelabstände von Halter zu Halter in Richtung der Drehachse stets gleichbleibend sind. Dieser Winkelabstand ergibt sich aus der Länge der Drehachse der Schlegelwelle und der Anzahl der benötigten Messer.

Die Arbeitsweise des erfindungsgemäßen Schlegelmulchers könnte als kontinuierlich angesehen werden, da der Schnitt während einer Umdrehung der Schlegelwelle von einer Seite zur anderen erfolgt, d.h. es ist immer eine stets gleichbleibende Anzahl von Schlegelmessern im Einsatz, wobei sich diese Anzahl aus den Winkelabständen ergibt.

In einer bevorzugten Ausführungsform ist vorgesehen, daß der Winkelstabstand zwischen den einzelnen benachbarten Haltern bzw. auch den Schlegelmessern im Bereich von 20° liegt. Daraus würde sich die Anzahl der Halter ergeben. Sofern in jedem Halter zwei Schlegelmesser eingesetzt werden, ergibt sich dann die doppelte Anzahl von Schlegelmessern.

Es ist nicht zwingend notwendig, daß die Winkelabstände von Halter zu Halter gleich sind, sondern daß die Winkelabstände von Halter zu Halter in Richtung der Drehachse der Schlegelwelle unterschiedlich sind, daß jedoch jeder Winkelabstand ein ganzzahliges Vielfaches des minimalen Winkelabstandes ist, so daß mit Blickrichtung auf die Stirnflächen die Winkelabstände gleich erscheinen. Wichtig ist, daß die Anordnung so getroffen ist, daß die Schlegelwelle ohne Unwucht rotiert. Es ist ferner vorgesehen, daß in jeden Halter zwei Schlegelmesser eingesetzt sind und daß zur Bildung von Schlag-oder Schneidkanten die dem Halter abgewandt liegenden Enden der Schlegelmesser nach außen bzw. gegenläufig abgewinkelt sind. Ferner ist vorgesehen, daß der von den Schlag- bzw. Schneidkanten und dem Befestigungsschenkel eingeschlossene Winkel im Bereich von 135° liegt. Der Schlegelmulcher kann als handgeführtes Gerät ausgelegt oder als Anbaugerät für einen Einachs- oder Kleinschlepper ausgelegt sein.

Der äußere Umlaufkreis der Schlegelmesser beträgt ein Vielfaches des äußeren Umlaufkreises der Halter. Dadurch wird eine ausreichende Geschwindigkeit für die schlagenden Teile der Schlegelmesser erreicht.

Es kann auch vorteilhaft sein, wenn die im Winkelabstand von 180° zueinander stehenden und zugeordneten Halter in Längsrichtung der Schlegelwelle versetzt sind, so daß sinngemäß diese Halter hintereinander angeordnet sind. Der äußere Umlaufkreis der Schlegelmesser könnte beispielsweise das Drei- bis Vierfache des äußeren Umlaufkreises der Halter betragen. Die Halter sind zweckmäßigerweise als Taschen ausgebildet, so daß mit einfachen Mitteln, beispielsweise mit Schrauben, die Schlegelmesser festgelegt werden können.

Es zeigen:
- Figur 1: die mit den Haltern bestückte Schlegelwelle eines bekannten Schlegelmulchers in einer Stirnansicht;
- Figur 2: zwei in einen Halter eingesetzte Schlegelmesser als Einzelheit und
- Figur 3: die mit Haltern Schlegelwelle des erfindungsgemäßen Schlegelmulchers in einer Stirnansicht und in einer gegenüber der Figur 1 geänderten Ausführung.

Aus Gründen der vereinfachten Darstellung ist der Schlegelmulcher als Ganzes nicht dargestellt.

Der Schlegelmulcher ist mit einer rotierend antreibbaren Schlegelwelle 10 die von einem Motor über ein Getriebe antreibbar ist, versehen..

Auf die Schlegelwelle 10 sind im dargestellten Ausführungsbeispiel sechsunddreißig Halter 11 beispielsweise durch Schweißung festgelegt. Die Halter 11 sind in Richtung der Drehachse der Schlegelwelle 10 in Abständen zueinander angeordnet. Außerdem sind die Halter 10 von Halter zu Halter im Winkelversatz zueinander angeordnet, wobei dieser Winkelversatz im dargestellten Ausführungsbeispiel 20° beträgt.

In jeden taschenförmigen Halter 11 sind zwei Schlegelmesser 12, 13 eingesetzt.

Die dem jeweiligen Halter 11 abgewandt liegenden Endbereiche, die eine Schneid- oder eine Schlagkante bilden, sind nach außen abgewinkelt. Die Halter 11 stehen nicht nur in Längsrichtung der Schlegelwelle 10 in einem Versatz zueinander, sondern in radialer Richtung liegen sich stets zwei Halter 11 und somit auch die darin eingesetzten Schlegelmesser 12, 13 gegenüber, d. h. sie sind um einen Winkel von 180° versetzt. Diese Anordnung bietet den Vorteil, dass die Schlegelwelle 11 ohne Unwucht rotiert. Bei der dargestellten Ausführung stehen die in zwei Haltern eingesetzten Schlegelmesser in Eingriff, d. h. sie schneiden bzw. schlagen das Gut ab.

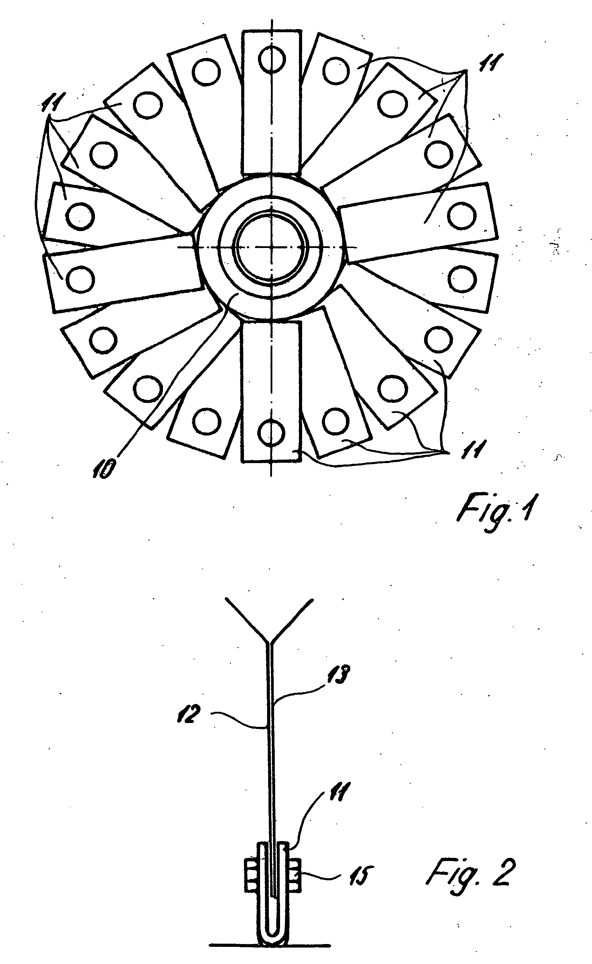

Ebenfalls aus Gründen der vereinfachten Darstellung sind die Schlegelmesser 12, 13 in der Figur 1 nicht eingezeichnet.

Im oberen Bereich ist jeder Halter 11 mit einer Durchgangsbohrung 14 versehen, damit die Schlegelmesser 12, 13 mittels Schrauben 15 festgelegt werden können.

Die Öffnungen in den Schlegelmessern 12, 13 sind so gestaltet, daß sich das Messer entgegen der Drehrichtung der Schlegelwelle 10 verschieben kann, wenn es beispielsweise auf einen harten Gegenstand trifft.

Aus der Figur 1 ergibt sich, daß die gedachte Verbindung von bestimmten Punkten in der Kontaktfläche zwischen der Schlegelwelle 10 und der anliegenden Fläche des Halters 11 gleichförmig verläuft. Durch die erfindungsgemäße Bestückung der Schlegelwelle 10 mit den Haltern wird die Anzahl der sich in der Arbeitsstellung bzw. Mähstellung befindlichen Schlegelmesser 12, 13 reduziert, so daß die Antriebsleistung gegenüber den bekannten Ausführungen verringert werden kann.

Bei einer Umdrehung der Schlegelwelle 10 verläuft der Schnitt von einer Stirnseite der Schlegelwelle zu anderen Schlegelwelle sinngemäß kontinuierlich.

Aus den Breiten der schlagenden Kanten der in einen Halter 11 eingesetzten Schlegelmesser 12, 13 und der Anzahl der Schlegelmesser bzw. der Halter ergibt sich die Arbeitsbreite des Schlegelmulchers.

Wird eine extrem große Arbeitsbreite gefordert, könnten entweder die Winkelabstände entsprechend gering sein oder sie könnten auch beibehalten werden, so daß die Wirkungsweise so ist, als wären zwei oder mehrere Schlegelwellen 10 aneinandergereiht.

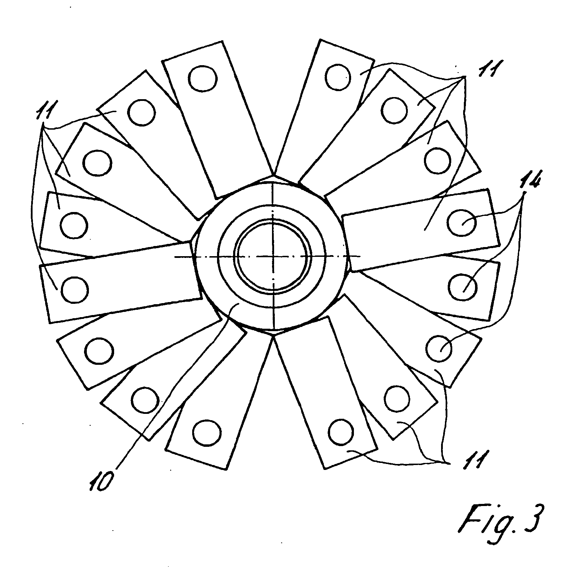

Die Figur 3 zeigt eine Variante der Schlegelwelle 10 zu der Ausführung gemäß der Figur 1. Aus fertigungstechnischen Gründen, insbesondere des Schweißens ist diese Schlegelwelle 10 mit den Haltern 11 so bestückt, dass gegenüberliegend, in der Stirnansicht gesehen, dreieckförmige durchgehende Lücken gebildet werden. Diese Lücken entsprechen dem doppelten Winkelabstand in dem die Halter 11 beziehungsweise die Schlegelmesser 12, 13 zueinander stehen. Ansonsten ist die sternförmige Anordnung der Halter 11 beziehungsweise der Schlegelmesser 12, 13 gewährleistet.

Der erfindungsgemäße Schlegelmulcher ist besonders für den Einsatz im Gartenbereich, für öffentliche Flächen in Parks und dergleichen ausgelegt, nicht jedoch, um landwirtschaftliches Erntegut einzubringen. Es ist demzufolge ein handgeführter Schlegelmulcher. Als Antriebsmaschine könnte ein Einachsschlepper oder ein Kleintraktor verwendet werden.

Die Erfindung ist nicht auf das dargestellte Ausführungsbeispiel beschränkt.

Wesentlich ist, daß die Schlegelmesser in Richtung der Drehachse der Schlegelwelle 10 von Halter zu Halter in einem Winkelversatz stehen, so daß die Anzahl der sich in der Arbeitsstellung befindenden Schlegelmesser 12, 13 so gering wie möglich ist.

### Bezugszeichenliste

- 10: Schlegelwelle
- 11: Halter
- 12: Schlegelmesser
- 13: Schlegelmesser
- 14: Durchgangsbohrung
- 15: Schrauben

## Patentansprüche

1. Schlegelmulcher mit einer rotierend antreibbaren Schlegelwelle (10), auf der Halter (11) festgelegt sind, in denen Schlegelmesser (12, 13) gehalten sind, die in Richtung der Drehachse der Schlegelwelle (10) in einem Versatz sowie im Winkelabstand zueinander derart stehen, daß in Richtung der Drehachse der Schlegelwelle (11) gesehen, eine sternförmige Anordnung der Schlegelmesser (12, 13) gegeben ist, und daß in radialer Richtung auf der Schlegelwelle (10) jeweils zwei Halter im Winkelversatz von 180° sich einander gegenüberstehen, **dadurch gekennzeichnet, daß** die Halter (11) für die Schlegelmesser (12, 13) derart zueinander angeordnet sind, daß in Längsrichtung der Schlegelwelle (10) zwei sich gegenüberliegende, durchgehende, frei von Haltern (11) und Schlegelmessern (12, 13) gehaltene Lükken gebildet sind.

2. Schlegelmulcher nach Anspruch 1, **dadurch gekennzeichnet, daß** die Winkelabstände von Halter zu Halter (11) in Richtung der Drehachse der Schlegelwelle (10) stets gleichbleibend sind.

3. Schlegelmulcher nach Anspruch 1, **dadurch gekennzeichnet, dass** die Winkelabstände von Halter zu Halter (11) in Richtung der Drehachse der Schlegelwelle (10) unterschiedlich sind, dass jedoch jeder Winkelabstand ein ganzzahliges Vielfaches des minimalen Winkelabstandes ist, so dass mit Blickrichtung auf die Stirnflächen der Schlegelwelle (10) die Winkelabstände gleich erscheinen.

4. Schlegelmulcher nach Anspruch 1, **dadurch gekennzeichnet, daß** jeder Halter als Tasche ausgebildet ist.

5. Schlegelmulcher nach Anspruch 2, **dadurch gekennzeichnet, daß** der Winkelabstand von Halter (11) zu Halter (11) in Richtung der Drehachse der Schlegelwelle (10) im Bereich zwischen 10° und 30° liegt.

6. Schlegelmulcher nach einem oder mehreren der vorhergehenden Ansprüche 1 bis 5, **dadurch gekennzeichnet, daß** der äußere Umlaufkreis der Schlegelmesser (12, 13) ein Vielfaches des äußeren Umlaufkreises der Halter (11) beträgt.

7. Schlegelmulcher nach einem oder mehreren der vorhergehenden Ansprüche 1 bis 6, **dadurch gekennzeichnet, daß** in jeden Halter (11) zwei Schlegelmesser (12, 13) eingesetzt sind, und daß zur Bildung von Schlag- oder Schneidkanten die dem Halter (11) abgewandt liegenden Enden der Schlegelmesser (12, 13) nach außen bzw. gegenläufig abgewinkelt sind.

8. Schlegelmulcher nach Anspruch 7, **dadurch gekennzeichnet, daß** der von den Schlag- bzw. Schneidkanten und dem Befestigungsschenkel eingeschlossene Winkel im Bereich von 135° liegt.

9. Schlegelmulcher nach einem oder mehreren der vorhergehenden Ansprüche 1 bis 8, **dadurch gekennzeichnet, daß** der Schlegelmulcher als handgeführtes Gerät ausgebildet oder als Anbaugerät für einen Einachs- oder Kleinschlepper ausgelegt ist.

10. Schlegelmulcher nach einem oder mehren der vorhergehenden Ansprüche 1 bis 9, **dadurch gekennzeichnet, dass** die in einem Winkelversatz von 180° zueinanderstehenden einander zugeordneten Halter in Längsrichtung der Schlegelwelle (10) zueinander versetzt sind.

## Claims

1. Flail mulcher, comprising a rotary driven flail shaft (10) on which holders (11) are fixed in which flail blades (12, 13) are held, which flail blades, in the direction of the rotational axis of the flail shaft (10), stand mutually offset and at an angular distance apart such that, viewed in the direction of the rotational axis of the flail shaft (11), a star-shaped arrangement of the flail blades (12, 13) is given, and in that, in the radial direction on the flail shaft (10), two holders stand respectively opposite each other at an angular offset of 180°, **characterized in that** the holders (11) for the flail blades (12, 13) are arranged in such a way one to another that, in the longitudinal direction of the flail shaft (10), two mutually opposing through-gaps, kept free from holders (11) and flail blades (12, 13), are formed.

2. Flail mulcher according to Claim 1, **characterized in that** the angular distances from holder to holder (11) in the direction of the rotational axis of the flail shaft (10) are always constant.

3. Flail mulcher according to Claim 1, **characterized in that** the angular distances from holder to holder (11) in the direction of the rotational axis of the flail shaft (10) are different, **in that** each angular distance, however, is an integral multiple of the minimum angular distance, so that, with a direction of view onto the end faces of the flail shaft (10), the angular distances appear equal.

4. Flail mulcher according to Claim 1, **characterized in that** each holder is configured as a pocket.

5. Flail mulcher according to Claim 2, **characterized in that** the angular distance from holder (11) to holder (11) in the direction of the rotational axis of the flail shaft (10) lies within the range between 10° and 30°.

6. Flail mulcher according to one or more of the preceding Claims 1 to 5, **characterized in that** the outer circuit of the flail blades (12, 13) amounts to a multiple of the outer circuit of the holders (11).

7. Flail mulcher according to one or more of the preceding Claims 1 to 6, **characterized in that** two flail blades (12, 13) are inserted in each holder (11), and **in that**, for the formation of striking or cutting edges, those ends of the flail blades (12, 13) which lie facing away from the holder (11) are angled off outwards or in opposite-working arrangement.

8. Flail mulcher according to Claim 7, **characterized in that** the angle formed by the striking or cutting edges and the fastening leg measures around 135°.

9. Flail mulcher according to one or more of the preceding Claims 1 to 8, **characterized in that** the flail mulcher is configured as a hand-guided tool or is designed as an attachment tool for a walking tractor or small tractor.

10. Flail mulcher according to one or more of the preceding Claims 1 to 9, **characterized in that** mutually assigned holders standing at an angular offset of 180° to one another are mutually offset in the longitudinal direction of the flail shaft (10).

## Revendications

1. Dispositif de paillage avec un axe de paillage (10) pouvant être entraîné de façon rotative, sur lequel sont fixés des supports (11), dans lesquels sont maintenus des couteaux de paillage (12, 13), qui sont disposés en étant décalés les uns par rapport aux autres et à une distance angulaire entre eux en direction de l'axe de rotation de l'axe de paillage (10), si bien que vu dans la direction de l'axe de rotation de l'axe de paillage (10), une disposition en forme d'étoile des couteaux de paillage (12, 13) est fournie, et en ce que en direction radiale de l'axe de paillage (10), chacun des deux supports est opposé à l'autre avec un déport angulaire de 180°, **caractérisé en ce que** les supports (11) pour les couteaux de paillage (12, 13) sont disposés entre eux, de telle sorte que dans la direction longitudinale de l'axe de paillage (10), deux interstices opposés, continus, maintenus librement par les supports (11) et les couteaux de paillage (12, 13) sont formés.

2. Dispositif de paillage selon la revendication 1, **caractérisé en ce que** les distances angulaires de support à support (11) sont toujours constantes en direction de l'axe de rotation de l'axe de paillage (10).

3. Dispositif de paillage selon la revendication 1, **caractérisé en ce que** les distances angulaires de support à support (11) sont différentes en direction de l'axe de rotation de l'axe de paillage (10), si bien que toutefois chaque distance angulaire est un multiple entier de la distance angulaire minimale, de telle sorte que les distances angulaires apparaissent identiques dans le sens du regard porté sur les faces frontales de l'axe de paillage (10).

4. Dispositif de paillage selon la revendication 1, **caractérisé en ce que** chaque support est configuré comme une poche.

5. Dispositif de paillage selon la revendication 2, **caractérisé en ce que** la distance angulaire de support (11) à support (11) se situe, en direction de l'axe de rotation de l'axe de paillage (10), dans la plage située entre 10° et 30°.

6. Dispositif de paillage selon l'une ou plusieurs des revendications précédentes 1 à 5, **caractérisé en ce que** le cercle de rotation externe des couteaux de paillage (12, 13) représente un multiple du cercle de rotation externe du support (11).

7. Dispositif de paillage selon l'une ou plusieurs des revendications précédentes 1 à 6, **caractérisé en ce que** deux couteaux de paillage (12, 13) sont utilisés dans chaque support (11), et **en ce que**, pour la formation des arêtes de frappe ou de coupe, les extrémités des couteaux de paillage (12, 13) opposées au support (11) sont incurvées vers l'extérieur, et/ou en sens contraire.

8. Dispositif de paillage selon la revendication 7, **caractérisé en ce que** l'angle compris par les arêtes de frappe et/ou de coupe et le montant de fixation se situe dans la gamme de 135°.

9. Dispositif de paillage selon l'une ou plusieurs des revendications précédentes 1 à 8, **caractérisé en ce que** le dispositif de paillage est configuré comme un appareil dirigé manuellement, ou est conçu comme outil porté pour un motoculteur ou un microtracteur.

10. Dispositif de paillage selon l'une ou plusieurs des revendications précédentes 1 à 9, **caractérisé en ce que** les supports associés entre eux déportés les uns par rapport aux autres à une distance angulaire de 180° sont décalés en direction longitudinale de l'axe de paillage (10).
